Europäisches Patentamt

European Patent Office

Office européen des brevets

(19)

(11) EP 0 728 991 B1

## (12) EUROPEAN PATENT SPECIFICATION

(45) Date of publication and mention
of the grant of the patent:
**18.11.1998 Bulletin 1998/47**

(51) Int Cl.⁶: **F23N 5/12**

(21) Application number: **96106767.5**

(22) Date of filing: **26.06.1992**

(54) **A compensating circuit for a flame rod structure**

Kompensationsschaltung für eine Anordnung einer Flammenelektrode

Circuit de compensation pour une structure à électrode d'ionisation

(84) Designated Contracting States:
**DE FR GB**

(30) Priority: **28.06.1991 KR 9110926**

(43) Date of publication of application:
**28.08.1996 Bulletin 1996/35**

(62) Document number(s) of the earlier application(s) in
accordance with Art. 76 EPC:
**92110862.7 / 0 520 507**

(73) Proprietor: **Samsung Electronics Co., Ltd.**
**Suweon-City, Kyungki-Do (KR)**

(72) Inventor: **Cha, Soo Young**
**Janan-ku, Suweon-City, Kyungki-Do (KR)**

(74) Representative: **Kahler, Kurt, Dipl.-Ing.**
**Patentanwälte**
**Kahler, Käck, Fiener et col.,**
**Vorderer Anger 268**
**86899 Landsberg/Lech (DE)**

(56) References cited:
**EP-A- 0 159 748          US-A- 4 107 657**
**US-A- 4 494 924**

• **PATENT ABSTRACTS OF JAPAN vol. 013, no.**
**161 (M-815), 18 April 1989 & JP-A-63 318421**
**(SANYO ELECTRIC CO LTD), 27 December 1988,**

## Description

## BACKGROUND OF THE INVENTION

The invention relates to a compensating circuit for promoting reliable operation of a flame rod structure.

## Prior Art

Generally, a custom heater or heater and a combustion apparatus have used fossil fuels to control a number of calories generated during heating based on flame sensing, in which flame sensing requires a metal material which can endure relatively high heat. In other words, the flame rod structure is made in the form of a metal rod as a sensor for detecting the generated amount of heat, oxygen concentration, firing and non-firing relative to the flame state of fossil fuels like petroleum. The flame rod detects a flame current of a predetermined voltage generated upon the combustion of fossil fuels, so that its equivalent circuit can be designed in a modelling pattern.

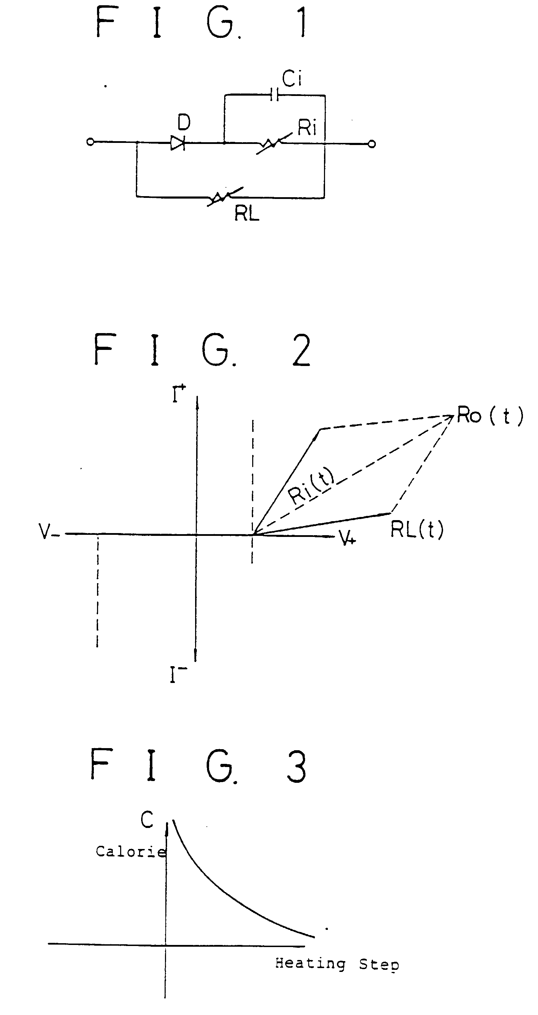

The flame current on the flame rod is first converted into a small amount of ion current according to the combination of the carbon and oxygen during the combustion of fossil fuels. Therefore, as shown in Fig. 1 the flame rod may be considered as an ideal diode because its ion current flows in one direction or is forward-biased. Then, the difference $Ri$ of the flame resistance dependent upon the amount of heat, generated during heating is generated. The drift of charge components (relative to the time elapse) forces the flame rod to have a small amount of electrostatic capacity $Ci$ according to the heating state. Also, the flame rod has a resistance value $RL$ due to the leakage current generated by its structural factors and the combustion condition.

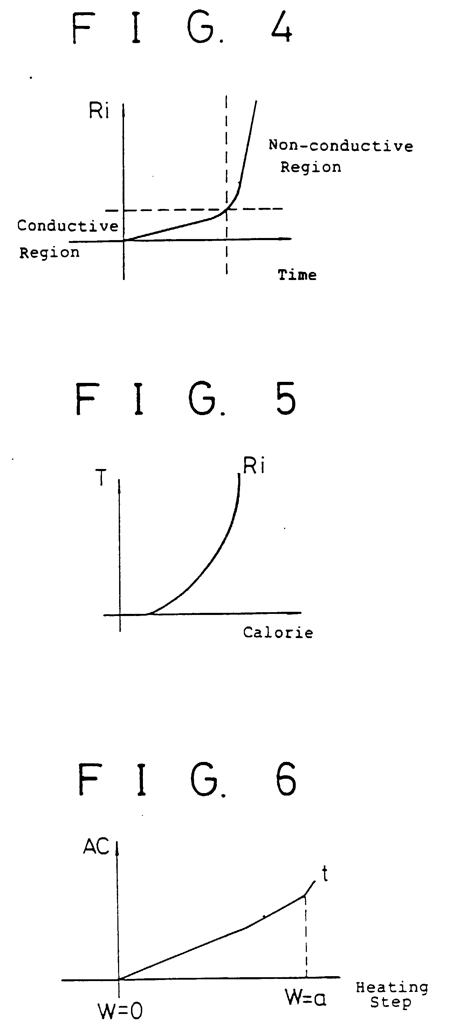

The characteristic of the voltage to the current of the flame rod is illustrated in Fig. 2. The forward characteristic of direct current (D.C.) represents the vector value of the leakage current value $RL$ to the flame resistance value per hour. The flame resistance $Ri$ is proportioned to the total amount of heat $Ro$( related with the temperature and the time), and the leakage current resistance $RL$ is proportional to the value of $R$ (the structural factor of the flame rod) multiplying the square of flame resistance $Ri$.

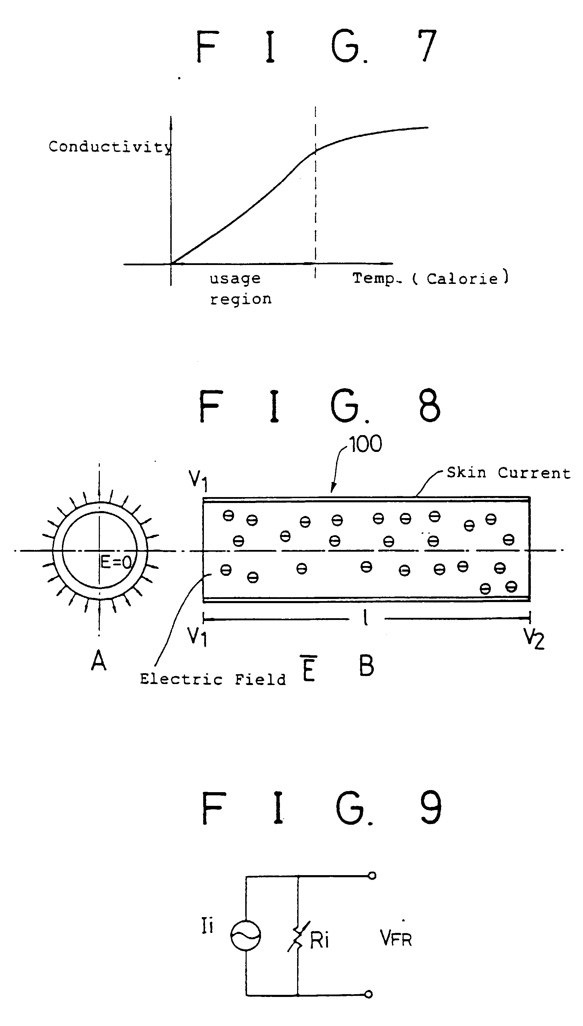

The electrical alternative current(A.C.) characteristic of the flame rod is shown in Fig. 3. That is, the relationship of the electrical A.C. to the flame current fluctuates with a heating change according to the amount of heat absorbed, which is determined by the combination rate according to the combustion ratio condition. The capacitance load $C$ is inversely proportional by an exponential function to the additional amount of heat. It represents the equation of $Ci \propto Co(w)$, wherein $w$ is the combustion ratio condition factor.

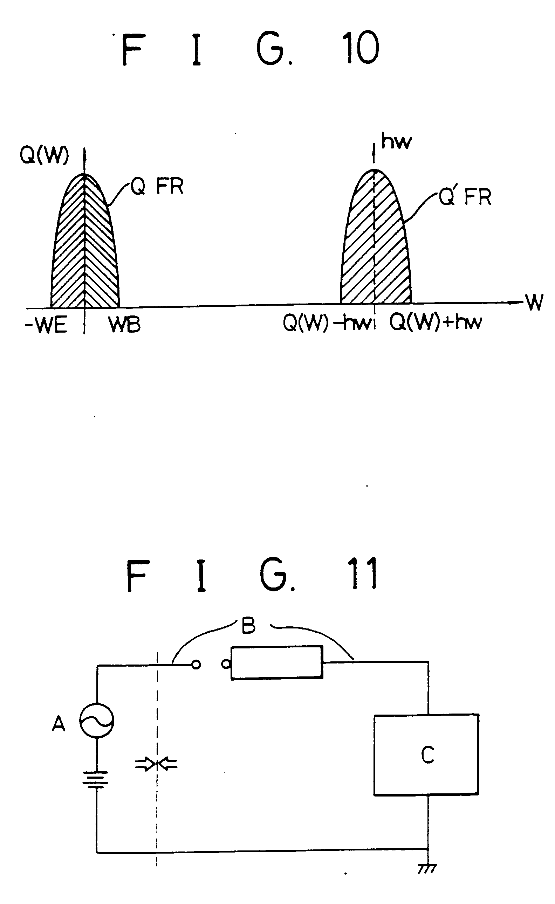

The flame rod is made of metal material serves as a conductor (medium) of the heat generated by the combustion flame, but has a conductivity characteristic which degrades according to the time elapsed and the temperature rise. It furthermore has problem with reliability of the exterior disturbance (the petroleum quality and the efficiency reduction of the complete combustion under a predetermined combustion ratio condition) and the electrical problems of its associated circuitry leading to the degradation of conductivity, thereby causing lost of the function of a conductivity medium after all as shown in Fig. 4.

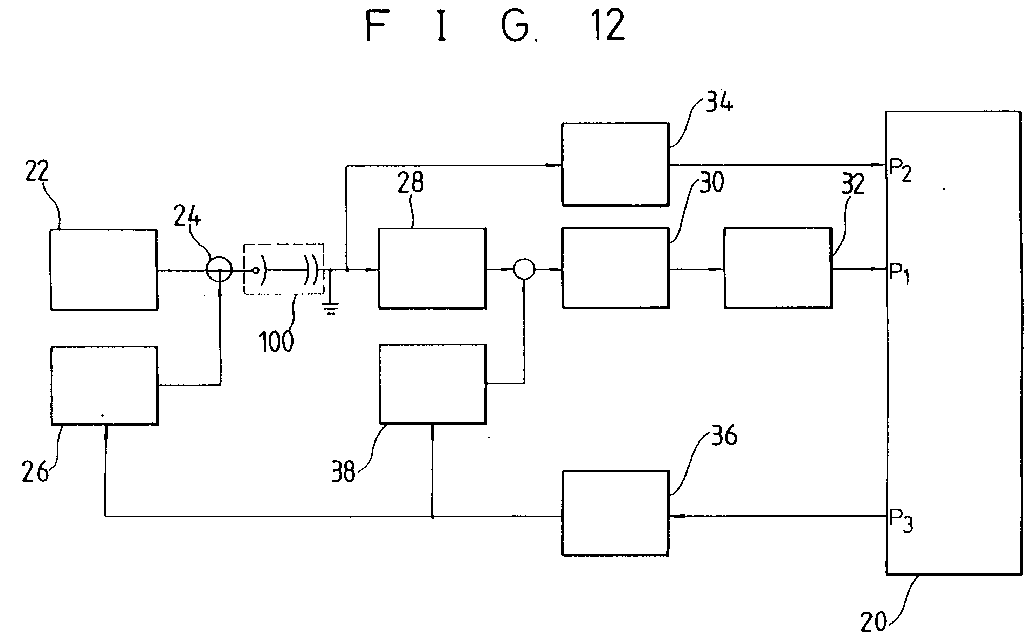

The metal flame rod also increases its flame resistance $Ri$ more and more according to the temperature rise, as shown in Fig. 5, because its conductivity characteristic accelerates the elastic collision of free electrons.

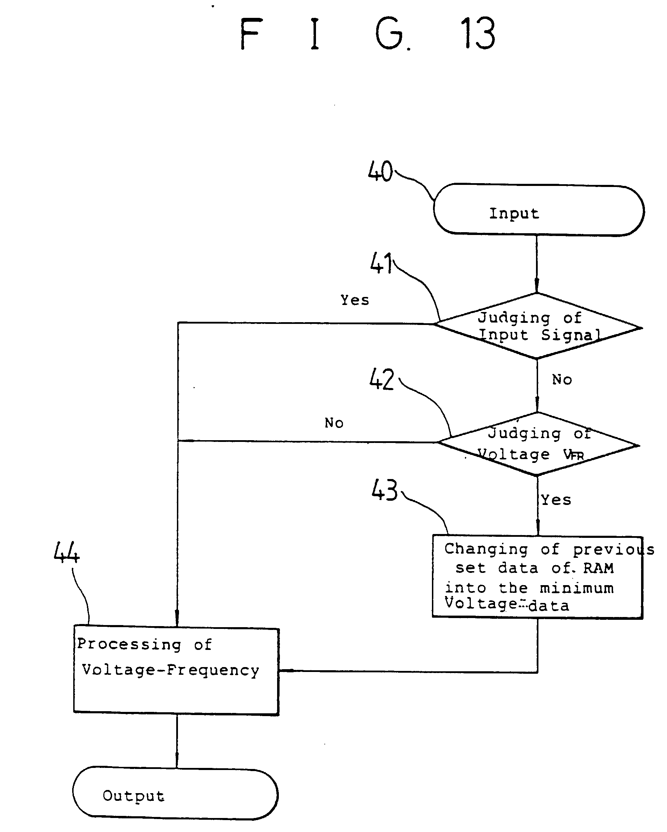

Additionally, the ion current converted from the flame current flows along the skin surface of the flame rod. The amount of charges is reduced according to the time elapsed, and the smaller the amount of heat is, the more the electrical AC characteristic of the skin current relative to the additional amount of heat is deteriorated as illustrated in Fig. 6.

As a result, the metal flame rod is under the relatively large exterior influences including the calories absorbed, the time and the temperature, so that its electrical characteristic is abruptly changed. It is appreciated that the metal flame rod is not ideal as a conductivity medium or device with respect to the associated circuitry.

The electric charge quantity $Q_F$ is represented as follows:

$$Q_F > \alpha Q_t \; \alpha \leq 1,$$

Wherein

$Q_F$: a quantity of the electric charge generated by the flame current

$Q_t$: a quantity of the electric charge supplied to the electrical network by the flame rod

$\alpha$ : the flame rod conductivity $\sigma$ (dependent on the temperature characteristic and the supplied electric charge quantity $Q_F$)

On the other hand, the metal flame rod resistance value is abruptly increased in the non-conductor area based on the time characteristic curve thereby causing the electrical loss shown in Fig. 4. The flame resistance $Ri$ relative to the time elapsed of the metal flame rod is dependent upon the fuel quality, but the increase of the flame resistance should be introduced only within the scope of the conductivity area. At that time, assuming that the skin current component has a maximum electric charge, the combustion of carbon material occurs adjacent to the skin surface of the flame rod to form a carbon cladding thereon, and the carbon cladding acts as a resistor to increase the flame resistance $Ri$, infinitely. Accordingly, it is noted that the flame rod may be remarkably improved by using materials which are not subject to the exterior influences like the amount of heat, the time and the temperature, etc.

It is an object of the invention to provide a compensating circuit for improving the function of a flame rod structure by applying the A.C. bias to the D.C. bias which is the generation factor of the skin current due to the interior impedance of the flame rod.

The object of the invention is solved by the circuit as defined in the claim.

## BRIEF DESCRIPTION OF THE DRAWINGS

The present invention will be described in detail below with reference to the attached drawings in which:

Fig. 1 is an electrical equivalent circuit of a metal flame rod in a burner using fossil fuels;
Fig. 2 is a graph illustrating an electrical characteristic related to the D.C. bias of the metal flame rod;
Fig. 3 is a graph illustrating an electrical characteristic related to the A.C. bias of the metal flame rod;
Fig. 4 is a graph illustrating the interior resistance value of the metal flame rod according to the time elapsed;
Fig. 5 is a graph illustrating the interior resistance of the metal flame rod related to the temperature rise;
Fig. 6 is a graph illustrating an electrical characteristic according to the heating step associated with the A.C. on-current;
Fig. 7 is a graph associated with the conductivity to the temperature illustrating an electrical characteristic of a flame rod structure which is constructed to have a metal and a semi-conduction material according to the present invention;
Fig. 8 is a view illustrating the flow of drift current associated with the electric field and direction of the flame rod structure according to the present invention;
Fig. 9 is an equivalent circuit view illustrating the electrical characteristic of the flame rod structure during sensing the flame;
Fig. 10 is a view illustrating one example for removing a low frequency and high impedance while varying the interior impedance of the flame rod structure;
Fig. 11 is a schematically view illustrating the concept of adding the A.C. bias to the D.C. bias, which is performed in the flame rod structure according to the principle of the present invention;
Fig. 12 is a block diagram illustrating a compensating circuit for improving the electric characteristic of the flame rod structure according to the principle of the present invention;
Fig. 13 is a flowchart illustrating a method for controlling the compensating circuit according to the principle of the present invention;
Fig. 14 is a waveform view illustrating a constant regulated voltage wave A, an excitation frequency wave B and a combination wave C thereof.

## DETAILED DESCRIPTION OF THE INVENTION

If the flame rod structure is able to facilitate the generation of the flame current have heat resistant property and reduce the skin current, it can be supposed an ideal flame sensor. In other words, the material which causes the reducticn of the skin current and the improvement of the conductivity and temperature characteristics related to the flame resistance Ri for overcoming the deficiencies disclosed in Figs. 4 and 5 is a semiconductor. Semiconductors are known as a conductivity medium having the excellent characteristics of the conductivity and the heat-resistanse property.

Therefore, an ideal flame sensor can exist in practice, if the defects of the metal flame rod are removed, and the merits of semi-conductor material are adapted to the flame rod. In order to realize the ideal flame sensor, the flame rod structure can be made of the combination of a metal and a semi-conductor.

The semiconductor material is heated to raise its temperature, so that the interior electrons become excited from a bound energy level to become free electrons. As a result, the flame component is charged due to the negative charge of negative ions, so that the electrons of the metal flame rod are combined with the positive holes of the semiconductor material to serve as charge components and promote a current drift corresponding to the heating temperature. This effect causes the charge, components of the semi-conduction material to compensate for the skin current reduction of negative ions generated in aging by raising the temperature.

Therefore, the charge flux is shown as follows:

$$Ju = n(E_C - \mu + 3/2\ K_B T)(-\mu e)E$$

Wherein,

Ju:     charge flux
N:     the number of the semiconductor atoms
$E_C$:     Energy level (conductivity band )
$K_B$:     Boltzman constant
T:     absolute temperature
$-\mu e$:     mobility of electron
E:     applied drift electric field strength

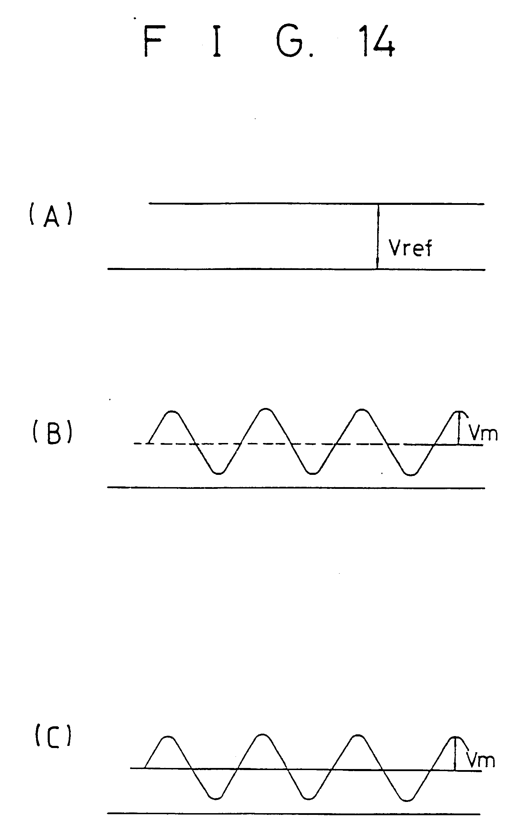

As shown in Fig. 7, the conductivity of the negative ion represents a state when the gradient in the non-conducting region of the high temperature is slightly smaller than that in the usage region.

Fig. 8 illustrates a flame rod including a crosssectional portion A and a lateral portion B. The flame rod is wrapped at a predetermined thickness by a semiconductor material. The electric field strength E at the center of the cross-sectional portion A is zero, and the cross-sectional electric field strength E is inversely proportional to a length I and proportional to the difference value obtained by subtracting the final voltage $V_2$ from the initial voltage $V_1$.

$$E = (V_1 - V_2)/I$$

At this point, the metal electrons can be combined with the positive holes of the semiconductor material. The semiconductor material not only increases the interior mobility of the semiconductor material relative to the negative ions by forming the drift electric field, but also conducts the drift current due to the effect ($Ju = 3/2$ $KT$) obtained by the charge flux thereof according to the temperature rise. At that time, the drift current components compensate for the reduction of the skin current occurred in aging by the combustion flame skin resistance. It is believed not to influence the conductivity of the flame rod as a whole. Consequently, the semi-conduction material contributes to draw out the conductance current.

On the other hand, a fluid(air) vibration of the flame rod caused by a combustion flame causes the charge fluctuation, so that the conductivity of the medium constituting the flame rod is reduced, if a heating step is low as shown in Fig. 3. This flame rod during the combustion is represented as the equivalent circuit illustrated in Fig. 9. Herein, the D.C. direction is the same as that in Fig. 1. However, the flame rod relative to a current Ii as illustrating the A.C. electrical characteristic in Fig. 2 has difficulty in processing the electrical signal like a constant voltage regulated power source, because its interior impedance is a relatively large and variable.

It is represented by the below equation.

$$Zi \ (calorie) = V_{FR}/Ji$$

$$Zi(W) = V_{FR}(W)/Ji(W)$$

Wherein,

$V_{FR}$: voltage of flame rod
$Ji$: current of flame rod
$W$: change of calorie

Consequently, the flame resistance Ri acts as an interior impedance at low frequencies as shown in Fig. 9. Thus, in order to transmit a larger signal the flame rod needs an associated bias/excitation circuit due to variability of the resistance value. The method for processing the low frequency signal is illustrated in Fig. 10. It is noted from Fig. 10 that the low frequency band(between WE to WB) is added to the reference frequency $h_W$ and then removed.

For example, $Q'_{FR} = Q_{FR} * h_W$

Also, the interior impedance mainly occurs due to the skin resistance. Therefore, the impedance value of Zi can be decreased by properly applying the A.C. bias to a D.C. bias circuit without reducing the capacity component Ci generated by the flow of the skin current illustrated in Fig. 1.

For example, $Zi = 1 / WCi$

Therefore, the design condition of the bias circuit is as follows:

As illustrated in Fig. 11, the current loss at the skin surface should be prevented.

For example, $Z_A = Z_B + Z_C$

$$Z_A(W) = Z_B(W) + Z_C(W)$$

Wherein,

$Z_A$: interior impedance of excitation circuit
$Z_B$: combustion flame voltage + impedance Z of flame rod medium conductivity voltage
$Z_C$: impedance Z of circuit C

Accordingly, it is necessary to apply the maximum A.C. bias to circuit C so as to minimize the impedance value of $Z_A$.

As described above, if it is based on the flame rod structure and the associated circuit, the flame rod, a so called flame sensor, acts as a variable signal source during operation, so that its conductivity loss may be reduced, and processes the electrical signals associated with relative to the fractionized flame states.

As shown in Fig. 8, a flame rod structure 100 generates a drift current to increase the interior electron mobility as a conductor, thereby, reducing the skin current and increases the quantity of drift current according to a rise in temperature. The temperature rise the charge flux Ju by about 3/2 HT.

The flame rod structure of the present invention is produced through one of two methods.

One method is to prepare a semiconductor composition comprised of a micro-particular magnetic substance. For example, an iron-semiconductor alloy is prepared by using the micro-powder of silicon, germanium as a semiconductor and iron, nickel as a metal powder. For example, the typical silicon alloy is formed so that the silicon powder of 3-5 % by its weight ratio is sintered with the metal powder, crushed into the micro-particulars, melted with the predetermined adhesive agent, such as an elastic adhesive agent, cooled and pressed/moulded at a high pressure.

The flame rod structure is electrically adapted to a high frequency application like the clad structure of a laminate type on the metal flame rod as described below, so that it improves the electrical characteristic such as the conductivity in the high temperature condition and especially has a low core loss, a high permeability and a low eddy current loss due to the increasing of the electrical resistance.

The other flame rod structure is prepared by coating the semiconductor material on the metal flame rod. Herein, metal-semiconductor junction portion constitutes the low-resistance region of a rectifying junction portion. Therefore, this junction portion can be used as a high-frequency diode. Meanwhile, this semiconductor (dielectric substance) surface provides an electrical conduction path in parallel to the volume portion of the metal flame rod, where the electrical conduction is characterized by the surface resistance value.

The dielectric substance of silicon causes the skin electrical conduction in a humid environment. At that time, if it is used as a flame sensor, the dielectric substance can not generate the charge drifting on the skin surface, thereby losing the conductivity function.

Additionally, the current at a high frequency is induced adjacent to the skin surface of the conductor or the flame rod structure, in which the skin depth is defined to reduce the current density by 1/e on the skin surface, and the skin resistance Rs is the D.C. resistance value of the conductor having the thickness of skin depth.

The surface(skin) resistance is as follows:

$$Rs = p / \delta = 1 / \alpha\delta$$

Wherein,

$p = $ electrical resistance (ohm), $\delta = $ thickness (m)
$\sigma = $ electrical conductivity (V/m)

Fig. 12 is a block diagram of a compensating circuit according to the principle of the present invention.

The compensating circuit 10 is provided with a microprocessor 20 so as to generate the excitation frequency relative to the flame rod structure which is a flame sensor. In other words, the flame rod structure 100 is connected to a mixer 24 at one end thereof, which receives input signals from a reference voltage generating circuit 22 and an excitation signal generating circuit 26.

The reference voltage generating circuit 22 is formed as a constant voltage regulated circuit for applying the D.C. bias to the flame rod structure 100, in which the D.C. bias is the signal of a waveform A shown in Fig. 14.

The excitation frequency signal generating circuit 26 creates the excitation signal of an A.C. component having a predetermined frequency, which is adjusted by the microprocessor 20. The excitation signal appears as the waveform B of Fig. 14, wherein a voltage Vm or Vex (t) is represented as follows:

$$Vex(t) = Vmsin (wt + \Phi).$$

Thus, the mixer 24 generates the signal of the frequency band for improving the electrical characteristic of the flame rod structure 100, in which the signal has a waveform C adding the waveform A to the wave form B, which represents the A.C. component voltage as follows:

$$Vc = Vref + Vmsin (wt + \Phi)$$

The flame rod structure 100 senses the flame state in addition to receiving the signal from the mixer 24 and then generates the flame sensing voltage according to the medium material of the flame rod structure 100. The flame sensed signal is inputted to a flame signal detecting circuit 28 and an excitation frequency separating circuit 34.

The flame signal detecting circuit 28 convolutes (raises) the flame detected signal to a voltage according to the frequency and the calorific step. Herein, the voltage is represented as follows:

$$V_D = Vref + Vmsin (wt + \Phi) * V_{FR}.$$

The convoluted flame detecting signal is applied to a low pass filter 30. The low pass filter 30 receives only the flame detecting signal $V_{FR}$ by means of an attenuator 38 connected through a voltage-frequency converter 36 to the third A/D converting port $P_3$, because the attenuator 38 forces the signal from the flame signal detecting circuit 28 to be made into a voltage signal of the A.C. component adding the waveform A to the waveform B so as to remove the excitation signal component from the flame signal detecting circuit 28. Herein, the voltage signal is represented as follows:

$$V_E = V_D - V_B$$

Thus, the low pass filter 30 permits only the frequency component of the actual flame detecting signal to be applied to a waveform shaping circuit 32. That is, the flame detecting signal is represented as follows:

$$V_F = V_{FR} = V_E$$

The waveform shaping circuit 32 applies the predetermined rectangular wave signal to the first analoge/digital(A/D) converting port $P_1$ of the microprocessor 20. At the same time, the signal from the flame rod structure 100 is applied to the excitation frequency separating circuit 34. The excitation frequency separating circuit 34 removes the excitation frequency, converts it into a frequency-voltage signal and then applies this converted signal to the second A/D converting port $P_2$ of the microprocessor 20.

The microprocessor 20 controls the compensating circuit as shown in Fig. 13.

Referring to Fig. 13, at step 40 the microprocessor 20 receives the signals from the excitation signal separating circuit 34 and the waveform shaping circuit 32. Step 40 goes onto step 41 to judge whether the input frequency-voltage data is the frequencyvoltage data previously stored in RAM thereof or not. When they are equal, step 41 moves onto step 44 to convert the exication signal into a voltage-frequency signal and outputs the converted signal at the third A/D converting port $P_3$ to the voltage-frequency converter 36. Otherwise, step 41 goes onto step 42 to judge whether the flame detecting signal $V_{FR}$ is equal to the minimum voltage previously stored in RAM of the microprocessor. If not, step 42 moves onto step 44 to convert the flame detecting signal into the voltage-frequency signal and output the converted signal at the third A/D converting port $P_3$ to the voltage-frequency converter 36. If the flame detecting signal $V_{FR}$ is equal to the minimum voltage, step 42 goes onto step 43 to convert the previously set RAM data into the minimum voltage and then moves onto step 44.

Therefore, the microprocessor 20 outputs the voltage-frequency converting signal having the predetermined excitation frequency through the D/A converting port $P_3$ to the voltage-frequency converter 36 according to the heating step of the flame rod structure, in which the voltage-frequency converter 36 converts the signal of the microprocessor 20 into the voltage-frequency signal and supplies it to the excitation frequency signal generating circuit 26.

As described above, a compensating circuit of the present invention supplies the current of the A.C. component to a flame rod structure 100 in addition to the signal of the D.C. component, so that it prevents the flow of skin current from being reduced.

## Claims

1. A circuit for compensating a skin current by applying an A.C. bias to a D.C. bias of a flame rod structure (100), said circuit comprising:

   means (22) for generating a D.C. bias signal;
   means (26) for generating an excitation frequency signal, said excitation signal being an A.C. bias relative to the flame rod structure (100);
   means (24) for mixing the D.C. bias signal with the excitation signal and generating a mixed signal of a predetermined frequency;
   means (28) for receiving the mixed signal, for sensing a flame state signal of said flame rod structure (100), and for generating a flame sensed signal;
   means (34), connected to said sensing means, for separating the excitation signal from the flame sensed signal;
   means, connected to said sensing means for convoluting said flame sensed signal to obtain a convoluted flamed sensed signal;
   means (30) for filtering the convoluted flame sensed signal to obtain a sensing frequency signal;
   means (32) for shaping a waveform of the sensing frequency signal and generating a shaped signal;
   a microprocessor (20) for processing said shaped signal and said excitation signal from said separating means and generating a compensating signal; and
   means (36) for converting the compensating signal into a signal having a frequency indicative of a voltage of said compensating signal to be supplied to said means (26) for generating an excitation frequency signal.

## Patentansprüche

1. Eine Schaltung zum Kompensieren eines Oberflächenstroms durch Anlegen einer Wechselstromvorspannung an eine Gleichstromvorspannung einer Flammenelektrodenanordnung (100), wobei die Schaltung umfaßt:

   ein Mittel (22) zum Erzeugen eines Gleichstromvorspannungssignals;
   ein Mittel (26) zum Erzeugen eines Anregungsfrequenzsignals, wobei das Anregungssignal bezüglich der Flammenelektrodenanordnung (100) eine Wechselstromvorspannung darstellt;
   ein Mittel (24) zum Mischen des Gleichstromvorspannungssignals mit dem Anregungssignal und zum Erzeugen eines gemischten Signals mit einer vorbestimmten Frequenz;
   ein Mittel (28) zum Empfangen des gemischten Signals, zum Abtasten eines Flammenzustandssignals der Flammenelektrodenanordnung (100) und zum Erzeugen eines Flammenabtastsignals;
   ein mit dem Abtastmittel verbundenes Mittel (34) zum Trennen des Anregungssignals von dem Flammenabtastsignal;
   ein mit dem Abtastmittel verbundenes Mittel zum Falten des Flammenabtastsignals, um ein gefaltetes Flammenabtastsignal zu erhalten;
   ein Mittel (30) zum Filtern des gefalteten Flammenabtastsignals, um ein Abtastfrequenzsignal zu erhalten;
   ein Mittel (32) zum Formen einer Wellenform des Abtastfrequenzsignals und zum Erzeugen eines geformten Signals;
   einen Mikroprozessor (20) zum Verarbeiten des geformten Signals und des Anregungssignals aus dem Trennmittel und zum Erzeugen eines Kompensationssignals; und

ein Mittel (36) zum Umwandeln des Kompensationssignals in ein Signal mit einer Frequenz, die eine Spannung des dem Mittel (26) zum Erzeugen eines Anregungsfrequenzsignals zuzuführenden Kompensationssignals anzeigt.

**Revendications**

1. Circuit destiné à compenser un courant d'effet de peau en appliquant une polarisation en courant alternatif sur une polarisation en courant continu d'une structure d'électrode de détection de flamme (100), ledit circuit comprenant :

un moyen (22) destiné à générer un signal de polarisation en courant continu,

un moyen (26) destiné à générer un signal de fréquence d'excitation, ledit signal d'excitation constituant une polarisation en courant alternatif par rapport à la structure d'électrode de détection de flamme (100),

un moyen (24) destiné à mélanger le signal de polarisation en courant continu au signal d'excitation et à générer un signal mélangé d'une fréquence prédéterminée, un moyen (28) destiné à recevoir le signal mélangé, afin de détecter un signal d'état de flamme de ladite structure d'électrode de détection de flamme (100), et à générer un signal de flamme détectée,

un moyen (34), relié audit moyen de détection, destiné à séparer le signal d'excitation du signal de flamme détectée,

un moyen, relié audit moyen de détection, destiné à appliquer une convolution audit signal de flamme détectée pour obtenir un signal de flamme détectée après convolution,

un moyen (30) destiné filtrer le signal de flamme détectée après convolution afin d'obtenir un signal de fréquence de détection,

un moyen (32) destiné à mettre en forme une forme d'onde du signal de fréquence de détection et à générer un signal mis en forme,

un microprocesseur (20) destiné à traiter ledit signal mis en forme et ledit signal d'excitation provenant dudit moyen de séparation et à générer un signal de compensation, et

un moyen (36) destiné à convertir le signal de compensation en un signal présentant une fréquence indicative d'une tension dudit signal de compensation devant être appliquée audit moyen (26) destiné à générer un signal de fréquence d'excitation.

# F I G. 1

# F I G. 2

# F I G. 3

# F I G. 4

Ri

Non-conductive
Region

Conductive
Region

Time

# F I G. 5

T

Ri

Calorie

# F I G. 6

AC

t

W=0

W=a

Heating
Step

# F I G. 7

# F I G. 8

# F I G. 9

# F I G. 10

# F I G. 11

F I G. 12

EP 0 728 991 B1

# F I G. 13

40 — **Input**

41 — Yes

**Judging of Input Signal**

No

42 — No

**Judging of Voltage $V_{FR}$**

Yes

43 — **Changing of previous set data of RAM into the minimum Voltage-data**

44 — **Processing of Voltage-Frequency**

**Output**

# F I G. 14

(A)

Vref

(B)

Vm

(C)

Vm